(19) Europäisches Patentamt / European Patent Office / Office européen des brevets

(11) **EP 2 691 799 B1**

(12) **EUROPÄISCHE PATENTSCHRIFT**

(45) Veröffentlichungstag und Bekanntmachung des Hinweises auf die Patenterteilung:
**19.08.2020   Patentblatt 2020/34**

(21) Anmeldenummer: **12703996.4**

(22) Anmeldetag: **30.01.2012**

(51) Int Cl.:
*F21V 8/00* *(2006.01)*          *F21S 2/00* *(2016.01)*
*B60Q 3/43* *(2017.01)*          *B60Q 3/64* *(2017.01)*
*F21S 41/24* *(2018.01)*         *F21S 43/237* *(2018.01)*
*F21S 43/245* *(2018.01)*        *F21S 43/13* *(2018.01)*

(86) Internationale Anmeldenummer:
**PCT/EP2012/051418**

(87) Internationale Veröffentlichungsnummer:
**WO 2012/130497 (04.10.2012 Gazette 2012/40)**

(54) **LED-BELEUCHTUNGSEINRICHTUNG**

LED-BASED LIGHT

DISPOSITIF D'ÉCLAIRAGE À DIODES ÉLECTROLUMINESCENTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.03.2011   DE 102011015161**
**06.10.2011   DE 102011084062**

(43) Veröffentlichungstag der Anmeldung:
**05.02.2014   Patentblatt 2014/06**

(73) Patentinhaber: **Schott AG**
**55122 Mainz (DE)**

(72) Erfinder:
• **GAYDOUL, Ekkehard**
**64401 Gross-Bieberau (DE)**
• **PLICHTA, Armin**
**55595 Sponheim (DE)**
• **MEINL, Jürgen**
**65329 Hohenstein-Holzhausen (DE)**
• **BLEISINGER, Björn**
**55499 Riesweiler (DE)**
• **CRAMER, Martin**
**65187 Wiesbaden (DE)**
• **REICHERT, Thomas**
**55263 Wackernheim (DE)**
• **SPRZAGALA, Marc Timon**
**55129 Mainz (DE)**
• **MATTHEIS, Sandra**
**65343 Eltville (DE)**

(56) Entgegenhaltungen:
EP-A1- 2 299 161          EP-A2- 2 063 296
WO-A1-2009/100834          WO-A1-2009/134572
WO-A1-2011/035081          DE-U1-202005 016 093
US-A1- 2006 262 564

**Beschreibung**

Die Erfindung betrifft eine LED-Beleuchtungseinrichtung sowie ihre Anwendungen. LEDs (Light Emitting Diodes) gewinnen zunehmend an Bedeutung als Lichtquelle, zum einen weil sie als energieeffizient gelten, zum anderen weil sie eine lange Lebensdauer aufweisen und somit wenig Wartungsaufwand erwarten lassen.

Eine LED ist ein elektronisches Halbleiterbauelement. Wird sie mit Strom versorgt, strahlt sie elektromagnetische Strahlung aus, deren Wellenlänge im infraroten, sichtbaren und/oder im ultravioletten Spektralbereich liegen kann. Der in der vorliegenden Beschreibung verwendete Begriff LED beinhaltet keine Einschränkung auf eine bestimmte Wellenlänge der emittierten Strahlung.

Es ist ebenso möglich, dass mehrere emittierende aktive Elemente auf einem Chip angeordnet werden, der ebenfalls im Sinne der vorliegenden Beschreibung als LED bezeichnet wird. Weiterhin ist mit dem verwendeten Begriff LED auch keine Einschränkung der Kohärenzlänge der emittierten Strahlung verbunden, so dass Laserdioden ebenfalls von diesem umfasst sind.

Eine für Beleuchtungsanwendungen nachteilige Eigenschaft von LEDs ist allerdings darin begründet, dass kommerziell erhältliche LEDs in einer Verkapselung geliefert werden, die einen Reflektor und/oder eine Linse beinhalten, welche die von der LED emittierte Strahlung in einem relativ geringen Öffnungswinkel nach vorne abstrahlen lässt. Für die Beleuchtung größerer Flächen werden daher nach wie vor gerne Leuchtstoffröhren eingesetzt. Diese sind allerdings mit dem Nachteil behaftet, dass sie leicht zerbrechen können, was insbesondere in Anwendungen problematisch ist, bei denen starke Vibrationen oder andere mechanische Belastungen auftreten können, aber auch, dass sie eine relativ hohe Zündspannung benötigen, welche entsprechend aufwendige Elektronikbauteile bei der Stromversorgung voraussetzen und ebenfalls elektromagnetische Störstrahlung aussenden können. Ein weiterer Nachteil von Leuchtstoffröhren ist, dass sie an ihrer Leuchtfläche Wärme und UV-Strahlung aussenden.

Um insbesondere den letztgenannten Nachteil zu umgehen schlägt die US 4,733,332 vor, das von einer Glüh- oder Gasentladungslampe emittierte Licht in die Stirnfläche eines Glasstabes einzukoppeln, der mit einem linienförmigen Diffusionsmuster auf seiner Mantelfläche versehen ist. Der Glasstab wirkt als Lichtleiter für das eingekoppelte Licht, das Diffusionsmuster koppelt es aus dem Glasstab in der Weise aus, dass es das auftreffende Licht in den Glasstab hinein reflektiert, durch ihn hindurchtreten und auf der gegenüberliegenden Seite des Glasstabes lateral aus diesem auskoppeln lässt. Auf diese Weise entsteht ein linienförmiges Beleuchtungsprofil mit einem Öffnungswinkel, der einer Leuchtstoffröhre mit Reflektor entsprechen kann. Abgesehen von den üblichen Nachteilen der vorgeschlagenen Lichtquellen ist die vorgeschlagene Vorrichtung mit dem Nachteil behaftet, dass mit ihr keine beliebig langen Lichtquellen in Form von Leuchtbändern herzustellen sind, weil bei steigender Länge der Glasstäbe der Helligkeitsabfall in der Mitte des Glasstabs in inakzeptabler Weise zunehmen würde.

Die EP 2063168 A1 beschreibt ein LED-Lichtsystem, bei dem das von LEDs emittierte Licht in die Stirnfläche eines Lichtleiters eingekoppelt wird, der auf einem Sockelprofil montiert ist. Der Lichtleiter selbst weist auf seiner Oberfläche keine Beschichtung auf, um das geführte Licht senkrecht zu der Achse des Lichtsystems zu lenken, sondern das Sockelprofil beinhaltet den Reflektor, der erweiterte Abstrahlwinkel gewährleisten soll. Diese Beleuchtungseinrichtung ist mit dem Nachteil behaftet, dass der Betrachter den Lichtleiter quasi als Schatten vor dem Reflektor wahrnehmen wird. Weiterhin muss das Licht aus dem Lichtleiter ausgekoppelt und dann vom Reflektor reflektiert werden, so dass mit Intensitätsverlusten zu rechnen ist. Werden solche Beleuchtungseinrichtungen hintereinander angeordnet, ist in den Zwischenräumen ein enormer Helligkeitsabfall zu beobachten, da die LEDs in eigenen Gehäusen auf dem Sockelprofil montiert werden und so einen großen Abstand zwischen den Hintereinander angeordneten Lichtleitern bedingen müssen. Mit dem offenbarten LED-Lichtsystem lässt sich kein homogen abstrahlendes Leuchtband realisieren.

Die WO 2011/035081 A1 hat einen Verbinder für Lichtleiter einer LED-Beleuchtungseinrichtung zum Gegenstand. Dieser Verbinder weist ein Gehäuse auf, das so dimensioniert ist, dass es im Inneren mindestens einen Endabschnitt eines Lichtleiters hält und der Form des Endabschnitts des Lichtleiters folgt. Es sind weiterhin Lichtquellen und deren elektrische Anschlüsse daran vorgesehen. Die LED Beleuchtungseinrichtung soll durch den Verbinder nicht unterbrochen erscheinen. Die Lichtleiter aus Kunststoff sind mit Lichtemmissionspunkten als Mittel zum Auskoppeln versehen, so dass Licht die Lichtleiter verlassen kann.

Vor diesem Hintergrund ist es eine Aufgabe der Erfindung, eine LED-basierte Beleuchtungseinrichtung zur Verfügung zu stellen, mit deren Hilfe sich eine beliebig lange Lichtquelle mit möglichst wenig lokalen Helligkeitsunterschieden entlang ihrer Längsachse herstellen lässt.

Die Aufgabe wird gelöst durch die Beleuchtungseinrichtung gemäß dem Hauptanspruch. Bevorzugte Ausführungsformen und Anwendungen ergeben sich aus den davon abhängigen Ansprüchen.

Die erfindungsgemäße LED-Beleuchtungseinrichtung umfasst zumindest zwei Lichtleiter. Jeder dieser Lichtleiter weist zumindest eine Stirnfläche auf. Die Lichtleiter werden so angeordnet, dass sich eine Stirnfläche des einen Lichtleiters und die nächstliegende Stirnfläche des anderen Lichtleiters in einem Abstand A zueinander befinden. Diese Stirnflächen bilden somit einen Zwischenbereich der Länge A. Vereinfacht ausgedrückt befindet sich der Zwischenbereich zwischen den einander zugewandten Stirnflächen der Lichtleiter. Bevorzugt werden die Lichtleiter so angeordnet, dass sie auf der Verlängerung ihrer jeweiligen Längsachsen liegen. Dadurch ergibt sich eine lineare Anordnung der Lichtleiter, die dem Benutzer im Betriebszustand als Leuchtband erscheint. Es ist aber ebenso eine versetzte Anordnung möglich, bei der sich die Stirnflächen der Lichtleiter nicht direkt gegenüber befinden. Dennoch sind sie im Sinne der Erfindung einander zugewandt. Bevorzugt sind die Lichtleiter starr, das Erfindungsprinzip ist allerdings ebenfalls mit flexiblen Lichtleitern realisierbar.

Der Zwischenbereich wird dazu genutzt, im Betriebszustand die von zumindest einer LED emittierte Strahlung in die Stirnflächen und somit in die Lichtleiter einzukoppeln. Damit die in den Lichtleitern geführte Strahlung im Sinne einer Beleuchtungseinrichtung genutzt werden kann, befinden sich in dem Außenumfangsflächenbereich der Lichtleiter Mittel zum Auskoppeln von Strahlung. Im Betriebszustand, d.h. wenn Strom durch die LED fließt, wird die von der zumindest einen LED emittierte Strahlung durch die Stirnfläche in den Lichtleiter eingestrahlt und von diesem durch Totalreflexion geführt. Die Mittel zum Auskoppeln der Strahlung sorgen dafür, dass die auf sie treffende Strahlung in den Lichtleiter hinein reflektiert und unter Durchtritt durch den Lichtleiter lateral, das bedeutet seitlich bzw. unter Austritt aus dessen Außenumfangsfläche, aus dem Lichtleiter ausgekoppelt wird. Der Abstand A und somit die Länge A des Zwischenbereichs wird so gewählt, dass im Betriebszustand der resultierende Helligkeitsunterschied ΔI in der Mitte des Zwischenbereichs in einem Abstand von 10 mm senkrecht zur Achse der Lichtleiter höchstens 25% beträgt. Dieser Wert wird bezogen auf den Maximalwert der Helligkeit, der Entlang der Achse der Lichtleiter bei gleichem Abstand senkrecht zu deren Achse gemessen wird. Die Messung der Helligkeit entlang der Achse der Lichtleiter und im Zwischenbereich erfolgt immer aus der Richtung des Benutzers, dies bedeutet aus der Richtung der durch die Mittel zum Auskoppeln der Strahlung aus den Lichtleitern austretenden Strahlung.

In einem Abstand von 20 mm senkrecht zur Achse der Lichtleiter beträgt der Helligkeitsunterschied ΔI in der Mitte des Zwischenbereichs dabei bevorzugt höchstens 5% bezogen auf den Maximalwert entlang der Achse der Lichtleiter.

Um diesen Wert ΔI zu bestimmen wird die Intensität der von der Beleuchtungseinrichtung im Betriebszustand emittierten und auf eine Mattscheibe treffenden Strahlung an einer Position in der Mitte des Zwischenbereichs und in einem Abstand von 10 mm senkrecht zur Achse der Lichtleiter gemessen. Daraufhin wird die Differenz zwischen dem Maximalwert der Intensität entlang der Achse der Lichtleiter und dem Wert der Intensität in der Mitte des Zwischenbereichs gebildet. Dieser Differenzwert wird dann in Relation zu dem genannten Maximalwert der Intensität gesetzt. Es gilt also die folgende Formel:

$$\Delta I = ( Imax - Imin ) / Imax$$

Imax steht für den beschriebenen Maximalwert der Intensität und Imin für den Wert der Intensität in der Mitte des Zwischenbereichs. Der Zahlenwert von ΔI wird im Sinne der Beschreibung in Prozent angegeben, maßgebend ist der Betrag des der Differenz von Imax und Imin.

Unterscheiden sich die Messwerte für Imax der beiden Lichtleiter, wird derjenige Messwert herangezogen, der der höchsten gemessenen Intensität entspricht. In der Regel befindet sich die hellste Stelle in der Nähe der jeweiligen Stirnfläche. Auf diese Weise wird der Wert für den Helligkeitsabfall ein Maß für die für den Benutzer wahrnehmbaren Helligkeitsschwankungen entlang der Achse der Beleuchtungseinrichtung. Es wird gewünscht, dass diese Helligkeitsschwankungen möglichst gering sind. Da das menschliche Auge Helligkeitsunterschiede nicht linear wahrnimmt, sondern näherungsweise logarithmisch in der Wahrnehmung auf Helligkeitsunterschiede reagiert, bedeutet ein gemessener Wert von ΔI von 25% oder weniger einen für menschliche Betrachter kaum wahrnehmbaren Helligkeitsunterschied.

Die für die Messung zu verwendende Mattscheibe wird in dem betreffenden Abstand zu der LED-Beleuchtungseinrichtung angebracht und die LED-Beleuchtungseinrichtung in den Betriebszustand versetzt. Als Mattscheibe kann beispielsweise auch ein Blatt Papier dienen, das bevorzugt auf einem Träger, beispielsweise einer transparenten Glasscheibe, aufgebracht ist. Die Mattscheibe hat einen sehr großen Akzeptanzwinkel und macht damit die Messung dem Verhalten des menschlichen Auges vergleichbar. Die Intensitäten der auf die Mattscheibe auftreffenden Strahlung kann durch geeignete Maßnahmen vermessen werden, beispielsweise durch die Aufnahme mit einer Digitalkamera von der Rückseite der Mattscheibe, wobei die lokalen Lichtwerte darauf folgend durch ein Bildbearbeitungsprogramm ausgelesen werden können. Andere geeignete Methoden zum Vermessen des Intensitätsprofils auf der Mattscheibe sind ebenso möglich und dem Fachmann bekannt.

Die Messung kann in anderen Abständen wiederholt werden, wobei sich die Helligkeitsunterschiede ΔI mit steigendem Abstand aufgrund der mit dem Abstand zunehmenden Überstrahlung des Zwischenbereichs verringern. Die Messwerte von ΔI hängen somit maßgeblich von den beiden Parametern Länge A des Zwischenbereichs und Abstand der Messung senkrecht zur Achse der Lichtleiter ab. Sollen verschiedene Beleuchtungseinrichtungen miteinander verglichen werden, muss das bei gleichem Abstand zu den Lichtleitern erfolgen.

Es ist möglich und von der Erfindung umfasst, die LED außerhalb der Achse der Lichtleiter anzuordnen. Die von ihr emittierte Strahlung kann durch Mittel zur Strahlumlenkung in die Stirnflächen der Lichtleiter eingekoppelt werden, beispielsweise durch Spiegel und/oder durch Prismen. Dies ermöglicht es, die von einer LED emittierte Strahlung in die beiden gegenüberliegenden Stirnflächen der Lichtleiter einzukoppeln.

Die Stirnflächen der Lichtleiter an den dem Zwischenbereich abgewandten Enden können verspiegelt sein, was bevorzugt ist, wenn die Beleuchtungseinrichtung mit einer einzigen LED im Zwischenbereich ausgeführt ist. Dies kann bei Beleuchtungseinrichtungen mit sehr begrenzten Längen und/oder sehr teuren LEDs vorteilhaft sein. Ebenso ist allerdings möglich, dass sich an den dem Zwischenbereich abgewandten Stirnflächen der Lichtleiter wiederum jeweils zumindest eine weitere LED befindet, die ihrerseits Strahlung in den jeweiligen Lichtleiter einstrahlen kann.

Ein Kerngedanke der Erfindung ist es, dass der Abstand zwischen der LED und der ihr zugeordneten Stirnfläche möglichst klein gewählt wird und somit der Zwischenbereich möglichst kurz wird, d.h. dass der Wert von A einen möglichst geringen Zahlenwert aufweist. Dieser geringe Abstand macht es möglich, dass sich in dieser bevorzugten Ausführungsform zwischen der jeweiligen LED und der jeweiligen ihr zugeordneten Stirnfläche keine weiteren optischen Einrichtungen mehr befinden. Unter weiteren optischen Einrichtungen werden hierbei insbesondere strahlfokussierende und/oder strahlumlenkende optische Einrichtungen wie beispielsweise Fokusierungslinsen und oder Kollimatorsysteme verstanden, die bei größeren Abständen prinzipiell verwendet werden müssen, um genügend von der LED emittierte Strahlung in den Lichtleiter einkoppeln zu können. Selbstverständlich ist es allerdings möglich und von dieser Formulierung umfasst, dass die LED selbst von optischen Einrichtungen gekapselt sein kann oder diese die oftmals im Auslieferungszustand vorhandenen direkt mit ihr verbundenen optischen Einrichtungen aufweisen kann. Durch den geringen Abstand werden also zusätzliche optische Einrichtungen überflüssig gemacht und noch dazu der Helligkeitsunterschied ΔI reduziert.

Bevorzugt ist zumindest jeder an den Zwischenbereich angrenzenden Stirnfläche der Lichtleiter wenigstens eine LED zugeordnet.

In einer besonders bevorzugten Ausführungsform beträgt der Abstand zwischen der jeweiligen LED und der jeweiligen Stirnfläche des ihr zugeordneten Lichtleiters höchstens 3 mm, besonders bevorzugt höchstens 1 mm. Diese Abstände werden von dem Abschluss des jeweiligen LED-Gehäuses bis zur Stirnfläche des jeweiligen Lichtleiters gemessen, sie entspricht somit der Länge des Freistrahlbereichs zwischen dem LED-Gehäuse und der Stirnfläche des jeweiligen Lichtleiters.

In dem Zwischenbereich zwischen den nächstliegenden Stirnflächen der Lichtleiter befinden sich die LED oder die LEDs sowie ggfls. zumindest ein Trägerelement und/oder elektronische Anschlusskomponenten der LEDs. Die Länge A des Zwischenbereichs wird entsprechend den vorhergehenden Ausführungen bevorzugt möglichst kurz gewählt. Bevorzugt beträgt die Länge A des Zwischenbereichs höchstens 15 mm, besonders bevorzugt höchstens 12 mm oder höchstens 10 mm, ganz besonders bevorzugt höchstens 8 mm.

Die Lichtleiter selbst können aus beliebigen geeigneten Materialen bestehen, beispielsweise Kunststoffen und/oder Glas. Bevorzugt ist allerdings, dass die Lichtleiter bevorzugt zumindest in ihrem Kernbereich aus einem Mehrkomponentenglas bestehen. Ein Mehrkomponentenglas, auch Mineralglas genannt, wird aus mehr als einem Rohstoff erschmolzen und enthält die Oxide mehr als eines chemischen Elements. Das unterscheidet es von einem Quarzglas, das nur aus $SiO_2$ besteht.

Bevorzugt bestehen die Lichtleiter zumindest in ihren Kernbereich aus einem Glas, das enthält: 70% - 85% $SiO_2$, 8% - 20% $B_2O_3$ und einzeln oder in Summe 2% - 8% $Na_2O$ und/oder $K_2O$ und/oder $Li_2O$. Dies bedeutet, dass nicht jedes der genannten Alkalimetalle in dem Glas enthalten sein muss, sondern mindestens eines in der genannten Mindestmenge. Weitere bevorzugte optionale Komponenten sind bis zu 7% $Al_2O_3$ und einzeln oder in Summe bis zu 5% MgO und/oder CaO und/oder BaO und/oder ZnO. Alle Prozentangaben in dieser Beschreibung werden in Gewichtsprozent (Gew.%) auf Oxidbasis angegeben. Bevorzugt enthält das Glas in Summe höchstens 50 ppm $Fe^{2+}$ und/oder $Fe^{3+}$, vorzugsweise höchstens 20 ppm, besonders bevorzugt höchstens 10 ppm. Weitere Komponenten sind optional, allerdings ist der Anteil von Schwermetallen wie Pb, Cd, Hg und Cr bevorzugt geringer als 100 ppm.

Ein solches Glas zeichnet sich durch seine hervorragende Beständigkeit gegenüber Angriffen von Wasser, Säure und Laugen aus. Insbesondere entspricht es einer Wasserbeständigkeitsklasse HGB1 nach ISO 719, einer Säurebeständigkeitsklasse S1 nach DIN 12116 und einer Laugenbeständigkeitsklasse A2 nach ISO 695. Beim Betrieb der Beleuchtungseinrichtung können die Lichtleiter sehr leicht mit Wasser, Säuren oder Laugen in Kontakt kommen, beispielsweise in Form von Luftfeuchtigkeit, Dämpfen von Betriebsstoffen und/oder Lösungsmitteln und/oder Reinigungsmitteln. Eine geringere Beständigkeit des Glases des Lichtleiters könnte zu einer Erblindung desselben führen, wodurch die Lichtleiter in ihrer Funktion eingeschränkt und am Ende die Beleuchtungseinrichtung unbrauchbar werden könnten. Daher führt die hervorragende Beständigkeit des bevorzugten Glases zu einer langen Lebenserwartung der Beleuchtungseinrichtung, auch unter widrigen Umständen.

Besonders bevorzugt bestehen die Lichtleiter zumindest in ihrem Kernbereich aus einem Glas, das enthält: 75% - 85% $SiO_2$, 8% - 15% $B_2O_3$, einzeln oder in Summe 2% - 8% $Na_2O$ und/oder $K_2O$ und/oder $Li_2O$, optional 0% - 5% $Al_2O_3$ und optional einzeln oder in Summe 0% - 2% MgO und/oder CaO und/oder BaO und/oder ZnO. Die vorgenannte Bedingung der Gehalte an $Fe^{2+}$ und/oder $Fe^{3+}$ gilt natürlich auch für diese besonders bevorzugten Gläser.

Das Glas weist bevorzugt ein Elastizitätsmodul E, auch Young's Modulus genannt, von höchstens $66 \cdot 10^3$ N·mm$^{-2}$ auf. Je kleiner der Zahlenwert von E ist, desto geringer ist die Steifheit des betreffenden Bauteils, hier des insbesondere starren Lichtleiters aus dem genannten Glas. Es hat sich herausgestellt, dass das Elastizitätsmodul E mit der Widerstandsfähigkeit des Glases gegenüber Vibrationen korreliert, und zwar in der Weise, dass der Lichtleiter umso besser den Vibrationen standhält, je weniger steif er ist. Dies bedeutet, dass angestrebt wird, dass der Wert des Elastizitätsmodul E des Glases der Lichtleiter möglichst gering sein sollte, um eine gute Vibrationswiderstandsfähigkeit zu gewährleisten. Vibrationen können einen Lichtleiter aus Glas insbesondere dadurch schädigen, dass sich Risse in diesem bilden, die zu einem Bruch des Lichtleiters und/oder zu Abplatzungen von Material führen können. Beides ist unerwünscht und kann zum Ausfall der Beleuchtungseinrichtung führen. Im Vergleich zu dem genannten Wert für das Elastizitätsmodul E von höchstens $66 \cdot 10^3$ N·mm$^{-2}$ weist Quarzglas, wie es für Beleuchtungsvorrichtungen aus dem Stand der Technik bekannt ist, ein Elastizitätsmodul E von $72,5 \cdot 10^3$ N·mm$^{-2}$ auf. Wie bereits beschrieben ist es viel spröder als das Mehrkomponentenglas gemäß der Erfindung und kann Vibrationsbelastungen weniger gut widerstehen.

Das Mehrkomponentenglas enthält in einer besonders bevorzugten Ausführungsform höchstens 50 ppm (parts per million) $Fe^{2+}$ und/oder $Fe^{3+}$. Insbesondere bei größeren Längen der Lichtleiter kann der Eisenanteil des Glases dazu führen, dass durch den Lichtleiter selbst eine Verschiebung des Farbspektrums der in ihm geleiteten Strahlung stattfindet, welche eine Emission von reinweißer Strahlung unmöglich machen würde. Mit anderen Worten bedeutet das bei Lichtleitern aus Glas, die einen höheren Anteil an $Fe^{2+}$ und/oder $Fe^{3+}$ als 50 ppm enthalten, dass wenn weißes Licht in ihnen geleitet würde, ein Farbstich beim Austritt des Lichts zu beobachten wäre, der für Beleuchtungsanwendungen unerwünscht oder zumindest nachteilhaft ist.

Das $Fe^{2+}$ und/oder $Fe^{3+}$ kann in dem Glas dabei in Form von Ionen vorliegen, oder aber in Form von Oxiden, beispielsweise FeO und/oder $Fe_2O_3$. Eisen gelangt oftmals in Gläser aufgrund von Verunreinigungen der Rohstoffe, die beim Schmelzen des Glases eingesetzt werden, aber auch durch die Verwendung von Stahlbauteilen, die in Verbindung mit der Glasschmelze kommen. Daher werden bei der Herstellung der Glasstäbe, die Bestandteil der erfindungsgemäßen Beleuchtungseinrichtung sind, bevorzugt besonders reine Rohstoffe verwendet. Die Verwendung von Glas als Material für die Lichtleiter hat gegenüber solchen aus Kunststoffen in der Regel den Vorteil einer höheren intrinsischen Transmission der Lichtleiter und damit besserer Lichtstärke der Beleuchtungseinrichtung. Darüber hinaus ist eine erfindungsgemäße Beleuchtungseinrichtung mit Lichtleitern aus Glas brandsicher, d.h. sie erfüllt hohe Anforderungen an die Brandsicherheit, wie sie beispielsweise als Zulassungsbestimmungen für verschiedene Anwendungen gefordert wird. Dieses Kriterium ist für die Einsatzfähigkeit beispielsweise in der Luftfahrt und/oder in Laborräumen und/oder in heißen Umgebungen wichtig. Erfindungsgemäß sind die Mittel zum Auskoppeln der Strahlung im Außenumfangsbereich der Lichtleiter aufgebracht. Sind die Lichtleiter als Glasstab ausgebildet, wird die Strahlung in dem Glasstab an der Grenzfläche des Glasstabes durch Totalreflexion gegen das umgebende Medium, im allgemeinen Luft, geleitet. Die Mittel zum Auskoppeln der Strahlung werden in diesem einfachsten Fall direkt außen auf dem Lichtleiter und somit auf seiner Außenumfangsfläche angebracht.

Es ist aber ebenso möglich, dass der stabförmige Lichtleiter aus einem Kernbereich aus dem genannten Glas besteht, der von einem weiteren Glas mit einem niedrigeren Brechungsindex ummantelt ist. Die für die Lichtleitung benötigte Totalreflektion erfolgt dann an der Grenzfläche zwischen dem Kern- und dem Mantelglas mit dem niedrigeren Brechungsindex. Die Mittel zum Auskoppeln der Strahlung können auf dem Kernglas angebracht sein und von dem Mantelglas bedeckt werden, oder aber bei geeigneter Wahl z.B. der Brechungsindices der Gläser auf dem Mantelglas selbst. Gegenüber dem Kern ist die Dicke des oder der umgebenden Mäntel aber vergleichsweise gering. Aus diesem Grund bedeutet der Begriff Außenumfangsflächenbereich im Sinne der Erfindung nicht nur die Außenumfangsfläche der Lichtleiter, sondern eine Fläche, die sich in der äußeren Peripherie der Lichtleiter befindet, also auch in einer gewissen Tiefe nahe der Oberfläche. So ist es ebenfalls möglich und von der Erfindung umfasst, dass die Mittel zum Auskoppeln der Strahlung und/oder der Lichtleiter von mindestens einer weiteren Schicht, z.B. einer Schutzschicht, bedeckt sind, unabhängig davon, ob sich die Mittel zum Auskoppeln der Strahlung unmittelbar auf dem Kern oder auf einem ihn umgebenden Mantel befinden. In diesem Fall kann es die Erfindung vorsehen, dass die Lichtleiter als seitenemittierende Lichtleiter ausgeführt sind, bei denen die Mittel zum Auskoppeln der Strahlung durch Streuzentren in der Grenzfläche von Kern und Mantel gebildet werden. Solche Lichtleiter sind in der WO 2009/100834 A1 beschrieben.

In der einfachsten Form werden Mittel zum Auskoppeln der Strahlung jedoch auf die Mantelfläche aufgedruckt und/oder aufgeklebt und/oder aufgesprüht. Sie befinden sich dann als Schicht direkt auf der Außenumfangsfläche. Es ist aber ebenso möglich, die Mittel zum Auskoppeln der Strahlung durch Strukturierung der Mantelfläche zu erzeugen, z.B. durch Aufrauen. Ebenso möglich ist das Aufbringen von Schichten, beispielsweise spiegelnden Schichten, durch physikalische Dampfphasenabscheidung (PVD), plasmainduzierte chemische Dampfphasenabscheidung (PICVD) und/oder Sputtern. Am einfachsten erfolgt allerdings das Aufdrucken oder Aufsprühen von beispielsweise weißer Farbe. Je nach Anwendung sind allerdings auch alle erdenklichen anderen Farben möglich. Durch die bevorzugt höchstens geringe Verfärbung des eingestrahlten Lichts durch den Lichtleiter gemäß der Erfindung kann somit die von der Beleuchtungseinrichtung emittierte Farbe einfach über die Farbe der Mittel zum Auskoppeln der Strahlung eingestellt werden. Alternativ kann ein Farbfilter in den Strahlengang eingebracht werden.

Bevorzugt weisen die Lichtleiter an zumindest jeweils einem ihrer jeweiligen Enden anschließend an ihre Stirnflächen zumindest eine Anfasung auf. Die Anfasung führt dazu, dass die Querschnittsfläche der Stirnfläche kleiner als die Querschnittsfläche der Lichtleiter in ihrer Mitte ist. Die Anfasung selbst ist bevorzugt so ausgeführt, dass sie zumindest eine im wesentlichen ebene Seitenfläche aufweist. Es hat sich gezeigt, dass eine solche Anfasung die Einkoppeleffizienz der LEDs in die Stirnflächen nicht nennenswert verschlechtert. Die Anfasung wird bevorzugt dazu verwendet, eine definierte Einbaulage der Lichtleiter zu gewährleisten, bevorzugt mit Hilfe eines mechanischen Anschlags wie weiter unten beschrieben.

Zum Fixieren der LED-Beleuchtungseinrichtung an anderen Gegenständen wird ein Montagekörper vorgesehen, der diese Funktion übernimmt. In einer bevorzugten Ausführungsform ist der Montagekörper wärmeleitend mit zumindest einem Trägerelement oder kurz Träger genannt verbunden, auf dem die zumindest eine LED im zuvor beschriebenen Zwischenbereich angebracht ist. Bevorzugt sind Träger und Montageelement einteilig ausgebildet. Der Träger kann dann beispielsweise ein Streifen sein, der aus dem Montageelement ausgeschnitten oder ausgestanzt und umgebogen worden ist. Das Montageelement selbst ist bevorzugt ein Profil aus Metallblech, das Trägerelement entsprechend ein Blechstreifen.

Der Träger und das wärmeleitend mit dem Träger verbundene Montageelement dienen in dieser Ausführungsform als Kühlkörper für die zumindest eine LED. Dies begegnet dem häufig auftretenden Problem bei dem Einsatz von LEDs, insbesondere lichtstarken Hochleistungs-LEDs, der Wärmeentwicklung. Wird die LED zu heiß, kann sie im Extremfall zerstört werden oder aber weniger Nutzstrahlung emittieren. Ein weiterer von der Betriebstemperatur bedingter Effekt ist der sogenannte Colorshift, der bedeutet, dass sich das Spektrum der emittierten Strahlung der LED abhängig von der Betriebstemperatur verändert.

Als LED können im Sinne der Erfindung alle verfügbaren LEDs, gleichgültig ob einzelne LED oder LED-Chips, verwendet werden. Dies umschließt ebenso Laserdioden, wenn die Anwendung der Beleuchtungseinrichtung dies erfordert. Besonders bevorzugt sind allerdings LED-Chips in SMD-Bauweise, weil mit diesen besonders kostengünstigen Beleuchtungseinrichtungen für allgemeine Beleuchtungszwecke bereitgestellt werden können. Die LED ist ebenfalls bevorzugt ein LED-Chip, der insbesondere einen RGB-, RGBA-, RGBW- oder einen RGGB-Chip umfasst. Weiterhin kann dieser besonders bevorzugt ein Sensor (sowie im Folgenden exemplarisch beschriebene Maßnahmen) zur Regelung des Farbortes und/oder der Helligkeit der emittierten Strahlung der LED zugeordnet sein. Dabei ist es möglich, dass sich der Sensor auf dem LED-Chip befindet, oder er kann an einer anderen Stelle im Strahlengang integriert sein. Ebenso ist es möglich, dass sich der Sensor an einer beliebigen Stelle des Lichtleiters befindet. Ebenso möglich ist es, dass der Sensor sich der Sensor oberhalb oder unterhalb des Lichtleiters befindet, bevorzugt auf dem Montagekörper angebracht. In dieser Ausführungsform detektiert er vorzugsweise vom Lichtleiter gestreutes Licht. Ebenso möglich ist eine Anordnung hinter den LEDs und/oder hinter dem LED-Chip, wenn diese zumindest teilweise durchlässig für Strahlung sind.

Der LED und/oder dem Chip ist in der Regel einer Auswerte- und Regelelektronik zugeordnet, welche den Farbort und/oder die Helligkeit bestimmt, woraufhin die LED bzw. der LED-Chip so angesteuert wird, dass bestimmte Betriebszustände der LED eingestellt werden. Durch gezielte Ansteuerung der Elemente des Chips erfolgt eine Farbmischung der emittierten Strahlung. Auf diese Weise kann beispielsweise Licht einer beliebigen Farbe von der LED und somit der Beleuchtungseinrichtung emittiert werden. Wie bereits bzgl. des Colorshift beschrieben kann der Farbort allerdings abhängig von den Umgebungsbedingungen, insbesondere der Temperatur, aber auch vom Alter der LED variieren. Diese Variation kann nicht determiniert werden, weshalb der Sensor die Intensität der Strahlung und deren Farbort messen soll. Durch Berücksichtigung dieser Werte bei der Ansteuerung der LED bzw. LED-Chips können ein reproduzierbarer und dauerhaft stabiler Farbort sowie eine reproduzierbare und dauerhaft stabile Intensität der von der Beleuchtungseinrichtung emittierten Strahlung erreicht werden.

Die Einbaulage der Lichtleiter bestimmt wegen der auf ihnen aufgebrachten Mittel zum Auskoppeln der Strahlung den Beleuchtungsort im Betrieb. In einer besonders bevorzugten Ausführungsform weist der Träger daher zumindest einen Anschlag auf, der mit der zuvor beschriebenen Anfasung der Lichtleiter so zusammenwirkt, dass eine definierte Einbaulage der Lichtleiter und damit der Mittel zum Auskoppeln der Strahlung relativ zum Montagekörper resultiert. Vereinfacht ausgedrückt bedeutet dies, dass die Verdrehung der Lichtleiter gegenüber dem Montagekörper durch den Anschlag verhindert und/oder beim Einbau die Verdrehung der Lichtleiter und damit deren Lage gegenüber dem Montagekörper definiert wird.

Der Anschlag selbst kann in jeder geeigneten Weise ausgeführt sein. Bevorzugt ist er ein mechanischer Anschlag, der in Kontakt mit der Anfasung der Lichtleiter steht. Beispielsweise kann er als Stift ausgeführt sein, der aus dem Träger in Richtung der Lichtleiter herausragt. Andere Formen sind ebenfalls denkbar, beispielsweise zumindest in Abschnitten der Form der Anfasung folgende Strukturen.

Die Lichtleiter selbst sind nicht notwendigerweise rund, d.h. sie weisen nicht notwendigerweise eine kreisförmige Querschnittsfläche auf. Sie können beispielsweise eine ovale Querschnittsfläche aufweisen, oder z.B. eine Querschnittsfläche, die auf der Seite der Mittel zum Auskoppeln der Strahlung abgeflacht ist. Jegliche geeignete Form ist denkbar und von der Erfindung umfasst. Ebenso müssen die Lichtleiter im Sinne der Erfindung nicht gerade sein. Jegliche Form ist möglich und von der Erfindung umfasst.

Um ein möglichst homogenes Emissionsprofil zu erzeugen, werden die Mittel zum Auskoppeln der Strahlung durch eine zumindest abschnittsweise auf den Lichtleitern aufgebrachte Beschichtung gebildet, die bevorzugt durch Variation ihrer Dichte und/oder Struktur und/oder geometrisches Muster und/oder Zusammensetzung so ausgebildet wird, dass im Betriebszustand der mit der Entfernung zur LED zunehmende Abfall der Intensität der in dem Lichtleiter geleiteten Strahlung zumindest teilweise ausgeglichen wird. So kann für den Benutzer der Eindruck einer weitgehend homogen abstrahlenden Lichtquelle erreicht werden. Alle zum Aufbringen der Beschichtung geeigneten Verfahren sind möglich, bevorzugt werden allerdings Druckverfahren, insbesondere Sieb- oder Tampondruck. Ein bevorzugtes geometrisches Muster für die Mittel zum Auskoppeln der Strahlung ist eine Sägezahnstruktur. Die Höhe und Breite der einzelnen Zähne sowie ihr Abstand zueinander kann in geeigneter Weise entlang der Achse der Lichtleiter entsprechend den Anforderungen eingestellt werden, um das gewünschte Beleuchtungsprofil, insbesondere die gewünschte Intensitätsverteilung, zu erreichen.

Ebenso ist es möglich und von der Erfindung umfasst, dass mehrere der beschriebenen erfindungsgemäßen Beleuchtungseinrichtungen nebeneinander, z.B. bevorzugt in Verlängerung ihrer jeweiligen Längsachsen nebeneinander angeordnet werden. Zwischen jedem der eingesetzten Lichtleiter befindet sich dann ein Zwischenbereich, in dem die Strahlung von jeweils zumindest einer LED einkoppelbar ist. Diese Ausführungsform ist bevorzugt, um besonders lange Beleuchtungseinrichtungen herzustellen. Die erfindungsgemäße Beleuchtungseinrichtung bildet also bevorzugt ein Modul einer größeren Beleuchtungsanordnung, in der sich die erfindungsgemäße Beleuchtungseinrichtung beliebig oft wiederholt. An den jeweiligen abschließenden Stirnflächen der Beleuchtungsanordnung befinden sich bevorzugt zumindest jeweils eine LED, die im Betriebszustand Strahlung in den abschließenden Lichtleiter strahlt.

Beim Betrieb der LED-Beleuchtungseinrichtung kann wie beschrieben Wärme entstehen, aber es ist ebenso möglich, dass die LED-Beleuchtungseinrichtung sich in Umgebungen befindet, die starke Temperaturschwankungen aufweisen können. Die Komponenten der Beleuchtungseinrichtung, insbesondere die Lichtleiter und deren Haltemittel weisen in der Regel unterschiedliche thermische Ausdehnungskoeffizienten auf. Dies hat zur Folge, dass sich die genannten Komponenten bei Temperaturänderungen gegeneinander bewegen können. Stoßen sie dabei zusammen, können diese Komponenten beschädigt und/oder dejustiert werden. Daher ist es vorgesehen, die Halter, welche die Lichtleiter in der Beleuchtungseinrichtung verbinden, so auszubilden, dass eine axiale Verschiebung der Lichtleiter möglich ist. Durch diese Maßnahme ist es ebenso möglich, Fertigungstoleranzen insbesondere bzgl. der Länge der Lichtleiter auszugleichen. Ebenso wird die Montage erleichtert.

Ebenso ist es vorgesehen, dass die Halter der Lichtleiter so ausgebildet sind, dass sie Vibrationen der Lichtleiters auch in der Richtung senkrecht zu deren Längsachse abfangen können. Dies kann dadurch erreicht werden, indem zumindest einige Haltemittel im Wesentlichen senkrecht zur Längsachse der Lichtleiter auslenkbar sind und nach der Auslenkung wieder in ihre Ursprungsposition zurückkehren. Neben der Gestaltung dieser Halter kann dies durch eine geeignete Materialwahl, beispielsweise aus thermoplastischen Kunststoffen, ermöglicht werden.

Die erfindungsgemäße Beleuchtungseinrichtung weist den besonderen Vorteil auf, dass sie aufgrund der geringen wahrzunehmenden Helligkeitsunterschiede $\Delta I$ im Zwischenbereich zu einer beliebig langen Kette von Beleuchtungseinrichtungen zusammenkoppelbar ist, die ein für den Benutzer weitestgehend homogen wirkendes Beleuchtungsprofil aufweist. Darüber hinaus können flammfeste Materialen verwendet werden können, insbesondere Lichtleiter aus Glas. Diese sind durch die bevorzugte Auswahl des Glases auch noch vibrationsresistent. Dies macht die Beleuchtungseinrichtung besonders geeignet für den Einsatz in Innenräumen von Flugzeugen, für die besondere Sicherheitsbestimmungen gelten. Besonders bevorzugte Anwendungen erfolgen daher in Flugzeugkabinen und/oder Flugzeugfrachträumen.

Ihre Vorteile sind aber auch nutzbringend einsetzbar in den Innenräumen von anderen Verkehrsmitteln wie Zügen oder Automobilen (Personenkraftwagen ebenso wie Lastkraftwagen).

Weitere vorteilhafte und bevorzugte Verwendungen sind allgemein Leuchtelemente von Fahrzeugen, bevorzugt Tagfahrlicht und/oder Positionslicht an der Front von Automobilen und/oder als Element deren Frontscheinwerfer, oder als Element der Heckleuchte von Automobilen.

Eine weitere bevorzugte Verwendung der erfindungsgemäßen Beleuchtungseinrichtung erfolgt als Element einer Designerlampe und/oder Haushaltslampe und/oder Bürolampe. Weitere bevorzugte Anwendungen sind Regalbeleuchtungen, insbesondere in Verkaufsregalen, Schränken und sonstigen Möbeln, einschließlich Küchengeräten wie Kühlschränken und/oder Herden oder Kühlräumen.

Allgemein kann die erfindungsgemäße Beleuchtungseinrichtung auch für die Beleuchtung von Außenflächen eingesetzt werden, beispielsweise Plätzen oder Parkebenen, Strassen, Wegen, Bahnsteigen, Haltestellen, Tunnels usw.. Fassaden oder Innenräume von Häusern können ebenfalls bevorzugte Anwendungsgebiete sein.

Die Erfindung wird im Folgenden anhand der Zeichnungen weiter verdeutlicht. Die Zeichnungen sind schematisch, die Maßstäbe und Abmessungen müssen nicht mit den tatsächlichen Gegenständen übereinstimmen. Es zeigen:

Figur 1:     Den Längsschnitt durch eine beschriebene Beleuchtungseinrichtung.

Figur 2:     Den Längsschnitt durch eine weitere beschriebene Beleuchtungseinrichtung.

Figur 3:     Den Längsschnitt durch eine weitere beschriebene Beleuchtungseinrichtung.

Figur 4:     Den Längsschnitt durch eine weitere beschriebene Beleuchtungseinrichtung.

Figur 5:     Das Prinzip der Lichtauskopplung.

Figur 6:     Den Längsschnitt durch eine weitere beschriebene Beleuchtungseinrichtung und das korrespondierende Intensitätsprofil.

Figur 7:     Intensitätsprofile einer Beleuchtungseinrichtung gemäß Figur 1 in verschiedenen Abständen zu den Lichtleitern.

Figur 8:     Den Längsschnitt durch eine Beleuchtungseinrichtung mit Träger und Montagekörper.

Figur 9:     Die perspektivische Darstellung einer real existierenden Beleuchtungseinrichtung.

Figur 10:    Den Längsschnitt eines Lichtleiters mit Anfasung und Träger mit Anschlag.

Figur 11:    Den Querschnitt eines Lichtleiters mit Anfasung und Träger mit Anschlag.

Figur 12a:   Eine beschriebene Beleuchtungseinrichtung mit einer Kette mit gebogenen Lichtleitern.

Figur 12b:   Eine beschriebene Beleuchtungseinrichtung mit einer Kette mit gebogenen Lichtleitern.

Figur 12c:   Eine beschriebene Beleuchtungseinrichtung mit einer Kette mit gebogenen Lichtleitern.

Figur 13:    Einen Flugzeuginnenraum mit einer beschriebenen Beleuchtungseinrichtung.

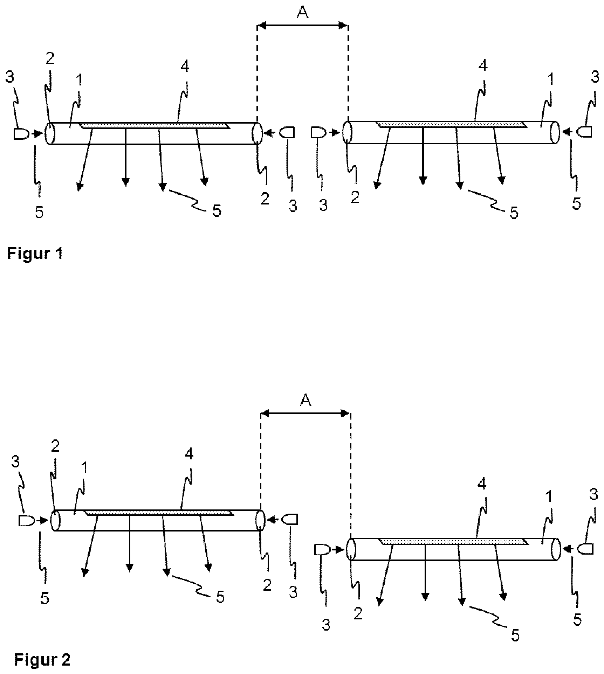

Figur 1 zeigt das Prinzip der erfindungsgemäßen LED-Beleuchtungseinrichtung in einem schematischen Längsschnitt. Im Betriebszustand wird Strahlung (5) von den LEDs (3) emittiert. Die LEDs (3) sind vor der jeweiligen Stirnfläche (2) der Lichtleiter (1) und in dem Zwischenbereich zwischen den sich gegenüber liegenden Stirnflächen (2) der Lichtleiter (1) angeordnet. Der Zwischenbereich weist die Länge A auf, die dem Abstand A zwischen diesen Stirnflächen (2) entspricht. Zum Einkoppeln der Strahlung (5) in die Lichtleiter werden keine weiteren optischen Einrichtungen verwendet. In dem Außenumfangsflächenbereich der Lichtleiter (1) sind Mittel zum Auskoppeln der Strahlung (4) vorhanden, die im Betriebszustand von der LED (3) emittiert wird. Im einfachsten Fall sind diese Mittel zum Auskoppeln der Strahlung (4) wie ebenfalls bereits beschrieben auf die Außenumfangsfläche der Lichtleiter (1) aufgedruckt oder aufgesprüht, wobei die Lichtleiter (1) bevorzugt starre mantelfreie Stäbe aus dem beschriebenen Glas sind. Trifft in den Lichtleitern (1) geführte Strahlung auf die Mittel zum Auskoppeln (4), wird sie in die Lichtleiter hinein reflektiert, tritt durch diese hindurch und wird lateral aus diesen ausgekoppelt. Die ausgekoppelte Strahlung (5) ist die Nutzstrahlung oder kurz das Licht, das dem Benutzer der Beleuchtungseinrichtung zur Verfügung gestellt wird.

In Figur 1 sind die Lichtleiter (1) in Verlängerung ihrer Längsachsen und auf diesen angeordnet. Daher wird diese Anordnung lineare Anordnung genannt. Von der Erfindung ebenfalls umfasst ist allerdings ebenfalls die in Figur 2 dargestellte versetzte Anordnung, in der die Lichtleiter (1) parallel zu ihren Längsachsen aber versetzt zueinander angeordnet sind. Bevorzugt liegen dabei die Ebenen der Stirnflächen (2) parallel zueinander. In dem Zwischenraum zwischen den beiden Lichtleitern (1) sind wiederum die LEDs (3) angeordnet, der Zwischenraum hat wiederum die Länge A. Die Länge A des Zwischenbereichs wird in der versetzten Anordnung auf der Verlängerung einer Längsachse der Lichtleiter (1) gemessen, also nicht auf einer Diagonalen, welche die Mittelpunkte der Stirnflächen (2) verbinden würde.

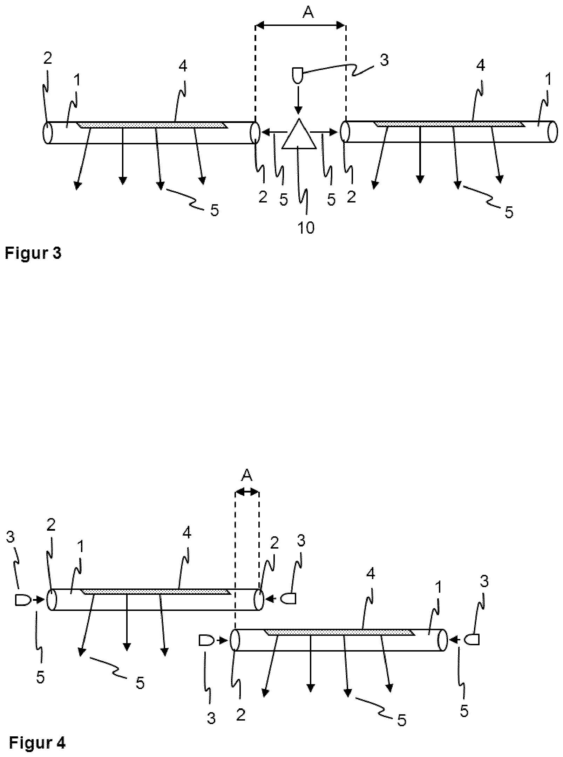

Figur 3 zeigt eine Ausführungsform mit linearer Anordnung, bei der das in die in die Lichtleiter (1) durch die Stirnflächen (2) eingekoppelte Strahlung (5) von nur einer LED (3) stammt. Diese ist außerhalb der Achse der Lichtleiter (1) angeordnet, die von ihr emittierte Strahlung wird durch das im Zwischenraum angeordnete optische Element (10) aufgespalten und auf die Stirnflächen (2) der beiden Lichtleiter (1) gelenkt. Das optische Element (10) kann ein Prisma sein, das insbesondere verspiegelte Seitenflächen aufweisen kann, oder aber ein Winkelspiegel wie in der Figur 3 dargestellt. Jegliches andere geeignete optische Element ist ebenfalls möglich und von der Erfindung umfasst.

In Figur 3 ist ebenfalls dargestellt, dass die dem Zwischenbereich abgewandten Stirnflächen (2) der Lichtleiter (1) wie bereits beschrieben nicht zwangsläufig zum Einstrahlen von Strahlung genutzt werden müssen. Erfindungsgemäß ist lediglich sicherzustellen, dass den an den Zwischenbereich angrenzenden Stirnflächen (2) der Lichtleiter (1) zumindest eine LED (3) zugeordnet ist.

Figur 4 zeigt exemplarisch wiederum eine parallel der Längsachsen der Lichtleiter (1) versetzte Anordnung, bei der sich Bereiche der Lichtleiter (1) überschneiden. Der Zwischenbereich hat auch eine Länge A, die in diesem Fall der Länge der Überschneidung der Lichtleiter (1) entspricht. Wie anhand der Zeichnungen ersichtlich ist, ist es ebenso möglich, dass die Ebenen der beieinander liegenden Stirnflächen (2) in der versetzten Anordnung aufeinander liegen, so dass die Länge A des Zwischenbereichs den Wert 0 annehmen kann.

Ein möglichst homogenes Intensitätsprofil mit einem möglichst geringen Helligkeitsunterschied ΔI wird in der Regel angestrebt. Das kann durch geeignete Anordnung und Ausführung der Mittel zum Auskoppeln der Strahlung (4) bei allen Ausführungsbeispielen erreicht werden.

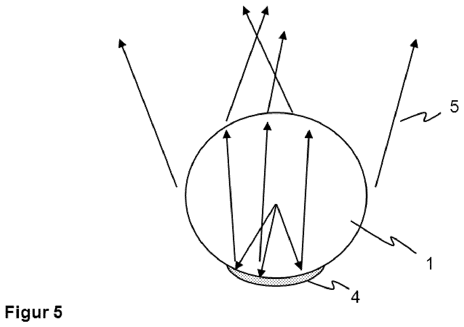

Das Prinzip der Wirkungsweise der erfindungsgemäßen LED-Beleuchtungseinrichtung wird anhand von Figur 5 verdeutlicht. Die im Betriebszustand von der LED (3) emittierte Strahlung (5) wird durch Totalreflektion im Lichtleiter (1) geführt. Trifft die Strahlung auf die Mittel zum Auskoppeln (4), die sich in der Figur auf der Außenumfangsfläche des Lichtleiters (1) und somit in dessen Außenumfangsflächenbereich befindet, wird sie in den Lichtleiter (1) hinein reflektiert. Dadurch treten die reflektierten Strahlen durch den Lichtleiter (1) hindurch und treffen in einem nennenswerten Anteil in einem Winkel auf die Wand des Lichtleiters (1), der (gemessen von der Tangente der Wand des Lichtleiters (1)) größer als der Winkel der Totalreflektion ist, so dass sie durch die Wand des Lichtleiters (1) ausgekoppelt werden und so für Beleuchtungszwecke zur Verfügung stehen. Dabei kann es durchaus erwünscht sein, dass auch ein gewisser Anteil der Strahlen in einem Winkel auf die Wand des Lichtleiters (1) treffen, der kleiner als der Winkel der Totalreflektion ist. Dadurch wird erreicht, dass nicht die gesamte Strahlung sofort aus dem Lichtleiter (1) ausgekoppelt wird, sondern ein Beleuchtungsprofil erreicht wird, das der Form der Mittel zum Auskoppeln (4) entspricht, bevorzugt ein linienförmiges (einschließlich gekrümmter Linien) Beleuchtungsprofil. Das Beleuchtungsprofil selbst, d.h. die Intensitäten der von der Beleuchtungseinrichtung emittierten Strahlung (5) an bestimmten Orten, kann auch wie beschrieben durch die Ausbildung der Mittel zum Auskoppeln (4) der Strahlung beeinflusst werden.

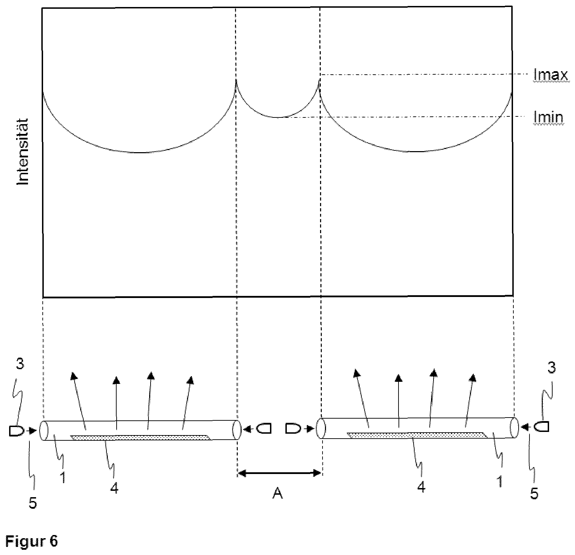

Durch die erfindungsgemäße LED-Beleuchtungseinrichtung soll ein möglichst homogenes Intensitätsprofil mit einem möglichst geringen Helligkeitsunterschied ΔI erreicht werden. Dies äußert sich dadurch, dass der Intensitätsabfall über die gesamte Länge der Beleuchtungseinrichtung möglichst gering sein soll. Eine besondere Problemstelle ist dabei der Zwischenbereich, in dem das Intensitätsprofil naturgemäß abfällt. In Figur 6 ist eine erfindungsgemäße LED-Beleuchtungseinrichtung gemäß der Ausführung entsprechend der Figur 1 gezeigt und darüber das Schema eines dabei zu messenden Intensitätsprofils. Das stellt die gemessene Intensität der von dem Mitteln zum Auskoppeln der Strahlung (4) aus den Lichtleitern (1) gelenkten Strahlung (5) entlang der Längsachse der Lichtleiter (1) dar, und zwar in Richtung der lateral aus den Lichtleitern ausgekoppelten Strahlung und in konstantem Abstand zur Längsachse der Lichtleiter. Im Bereich der Stirnflächen (2) der Lichtleiter (1) wird die höchste Intensität mit dem Wert Imax erzielt. Da jeder Stirnfläche (2) eine LED (3) zugeordnet ist, werden bei gleicher Leistung der LEDs (3) und gleicher Ausgestaltung der Lichtleiter (1) inklusive der Mittel zum Auskoppeln der Strahlung (4) prinzipiell gleiche Intensitätswerte im Bereich der Stirnflächen (2) erreicht. In dem Zwischenbereich mit der Länge A fällt die Intensität auf den minimalen Wert Imin ab. Die absoluten im Zwischenbereich zu messenden Intensitätswerte hängen dabei maßgeblich auch von dem Abstand bei der Messung senkrecht zur Längsachse der Lichtleiter (1) ab und von der Länge A des Zwischenbereichs. Der Helligkeitsunterschied ΔI im Zwischenbereich wird wie beschrieben durch die angegebene Formel aus der Differenz aus Imax und Imin berechnet, die ins Verhältnis zu Imax gesetzt und in Prozent ausgedrückt wird. Die Absolutwerte der Intensitäten und damit die von den LEDs (3) emittierte Strahlungsleistung spielt daher für die Angabe des Helligkeitsunterschieds ΔI keine Rolle.

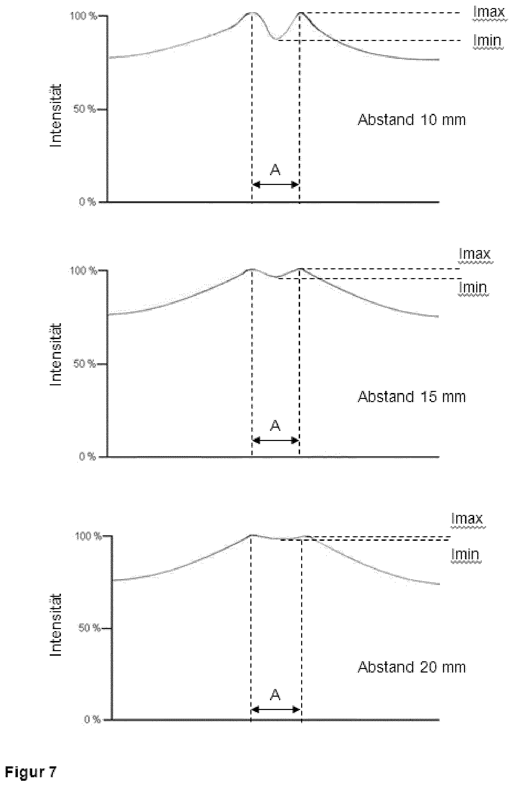

Figur 7 zeigt die die an einer real existierenden Beleuchtungseinrichtung gemessenen Intensitätsprofile in verschiedenen Abständen zur Längsachse der Lichtleiter (1) und in willkürlichen Einheiten. Diese vermessene Beleuchtungseinrichtung entspricht der Ausführungsform nach Figur 1, allerdings ohne die LEDs (3) an denen dem Zwischenbereich abgewandten Stirnflächen (2) der Lichtleiter (3). Daher werden an den Enden der Lichtleiter niedrigere Intensitätswerte als an den Einkoppelstellen am Zwischenbereich erreicht.

Die obere Abbildung der Figur 7 stellt den Intensitätsverlauf im Abstand von 10 mm gemessen senkrecht zur Achse der Lichtleiter dar, die mittlere Abbildung den Intensitätsverlauf im Abstand von 15 mm und die untere Abbildung den Intensitätsverlauf im Abstand von 20 mm. Die Länge A des Zwischenbereichs ist selbstverständlich identisch. Die Werte der Intensitäten werden in willkürlichen Einheiten angegeben, die von Abbildung zu Abbildung nicht übereinstimmen müssen. Wie zu sehen ist erhöhen sich die Werte von Imin mit zunehmendem Abstand der Messung relativ zu Imax, so dass die Differenz zwischen Imax und Imin mit zunehmendem Abstand kleiner wird. In willkürlichen Einheiten betragen im Abstand von 10 mm die Werte von Imax und Imin 50 bzw. 43, was einer Differenz von 7 und somit einem Wert von ΔI von 14% entspricht. Im Abstand von 15 mm beträgt Imax ebenfalls in willkürlichen Einheiten 50, Imin aber immerhin 48. Die Differenz von 2 führt zu einem Wert von ΔI von 4%. Im Abstand 20 mm beträgt der Wert Imax in willkürlichen Einheiten wiederum 50, Imin allerdings bereits 49. Die Differenz beträgt 1 was einem ΔI von 2% entspricht.

Im Abstand von 20 mm ist demnach fast keine Differenz dieser Werte mehr zu sehen und damit nur ein äußerst geringer Helligkeitsunterschied ΔI. Zieht man in Betracht, dass der Abstand eines Benutzers einer erfindungsgemäßen Beleuchtungseinrichtung in der Regel mindestens einen Meter und erheblich mehr beträgt macht das ersichtlich, dass die erfindungsgemäße Beleuchtungseinrichtung trotz des sparsamen Umgangs mit der Anzahl von LEDs ein bemerkenswert homogenes Intensitätsprofil aufweist.

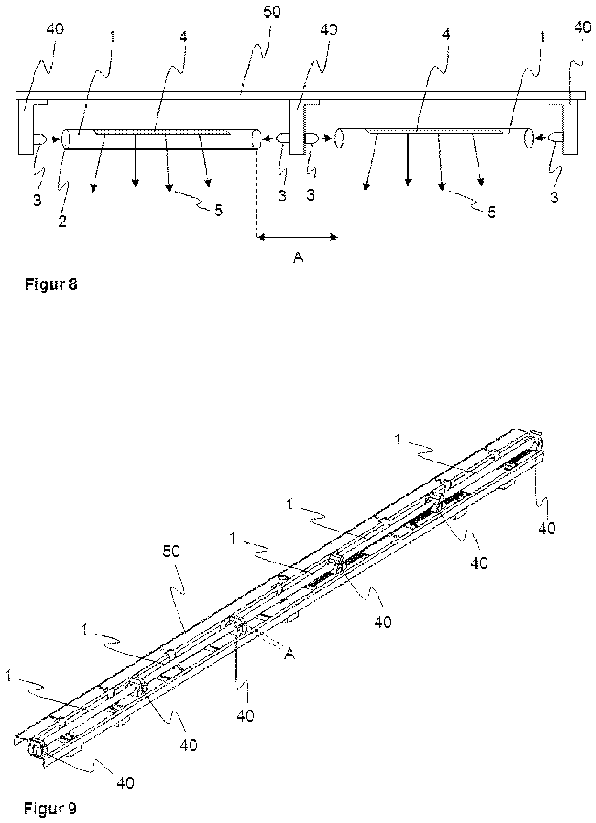

In Figur 8 ist die bevorzugte Montage einer Beleuchtungseinrichtung entsprechend der Ausführung nach Figur 1 schematisch dargestellt. Die LEDs (3) sind auf den Trägern (40) angebracht. Die Träger (40) sind mit dem Montagekörper (50) verbunden. Die Verbindung wird bevorzugt so ausgeführt, dass eine Wärmeleitung von den Trägern (40) in den Montagekörper (50) möglich ist. Die Oberflächen der Träger (40) und insbesondere des Montagekörpers (50) können somit die von den LEDs (3) im Betriebszustand erzeugte Wärme als Wärmesenke aufnehmen und insbesondere auch über ihre Oberfläche wieder abstrahlen. Träger (40) und Montagekörper (50) können so als Kühlkörper dienen.

Der Montagekörper (50) und die Träger (40) sind wie beschrieben bevorzugt einteilig ausgebildet. Sie bestehen bevorzugt aus einem wärmeleitenden Material, insbesondere einem Metall (einschließlich Legierungen von Metallen). Besonders bevorzugt sind Aluminium und/oder Kupfer und/oder Messing und/oder Stahl, insbesondere Edelstahl. Zur Verstärkung des Kühleffekts kann der Gehäusekörper Maßnahmen zur Vergrößerung seiner Oberfläche aufweisen, beispielsweise Kühlrippen. Der Montagekörper (50) wird wiederum bevorzugt an anderen Gegenständen angebracht.

In Figur 9 ist schematisch und perspektivisch eine vorteilhafte Ausgestaltung einer erfindungsgemäßen LED-Beleuchtungseinrichtung dargestellt. Diese Figur repräsentiert ebenfalls das Ausführungsbeispiel. Diese Beleuchtungseinrichtung weist fünf in Verlängerung ihrer Längsachsen auf diesen angeordnete starre stabförmige Lichtleiter (1) aus dem genannten Glas auf. Zwischen den Lichtleitern befinden sich vier Zwischenbereiche der Länge A, im Ausführungsbeispiel 14 mm, in denen die Träger (40) angebracht sind. An den Enden der Beleuchtungseinrichtung befindet sich wiederum ein Träger (40). Auf den Trägern (40) befinden sich die LEDs, und zwar so, dass jeder zu Stirnfläche der Lichtleiter (1) eine LED zugeordnet ist. Träger (40) und Montagekörper (50) sind einteilig ausgeführt. Wie man sieht weist das Profil des Montagekörpers (50) eine asymmetrische Form auf, die Lichtleiter (1) und Träger (40) sind auf einer Fläche des L-förmigen Profils angebracht. Auf der Rückseite des Montagekörpers (50) sind bevorzugt elektronische Komponenten angebracht, welche z.B. zum Betreiben der LEDs benötigt werden. Der Montagekörper (50) weist ebenfalls zu sehende Bohrungen auf, mittels denen er mit anderen Gegenständen verschraubt oder vernietet werden kann.

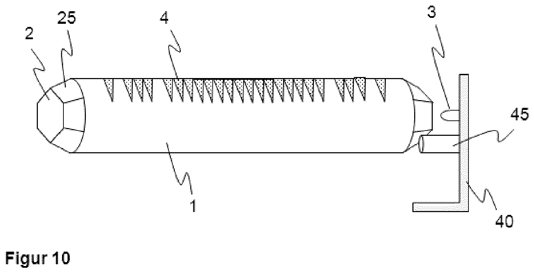

Figur 10 stellt einen Lichtleiter (1) einer erfindungsgemäßen Beleuchtungseinrichtung mit jeweils einer Anfasung (25) an seinen Enden im Längsschnitt dar. Die Querschnittsfläche der Stirnflächen (2) haben in diesem Beispiel die Form eines Sechsecks, der Flächeninhalt der Stirnfläche ist kleiner als eine Querschnittsfläche durch das Volumen des Lichtleiters (1). Daher steigt in der Aufsicht die Anfasung in Richtung der Außenumfangsfläche an. Eine gestufte Form ist allerdings ebenso möglich. Durch die sechseckige Form werden 6 ebene Flächen im Bereich der Anfasung geschaffen. Diese könnten dazu genutzt werden, die Einbaulage des Lichtleiters (1) zu definieren. Dazu weist der Träger (40) einen Anschlag (45) auf, der mit einer ebenen Fläche der Anfasung in Kontakt steht. Damit kann der Lichtleiter (1) auch im Betrieb und beim Auftreten starker Vibrationen nicht mehr gegenüber dem Träger (40) und damit auch nicht gegenüber dem Montagekörper (50) verdreht werden. Durch die sechseckige Form werden auch einzelne diskrete Werte einer möglichen Verdrehung des Lichtleiters (1) geschaffen, so dass beim Einbau kein weiterer Justageaufwand entsteht. Die Verdrehung des Lichtleiters (1) definiert die Lage der Mittel zum Auskoppeln der Strahlung (4) und damit den Ort der Beleuchtung. Die Mittel zum Auskoppeln (4) sind in der Figur als zuvor beschriebene Sägezahnstruktur dargestellt, bei der der Abstand zwischen den Zähnen variiert wird, um ein gewünschtes Intensitätsprofil einzustellen.

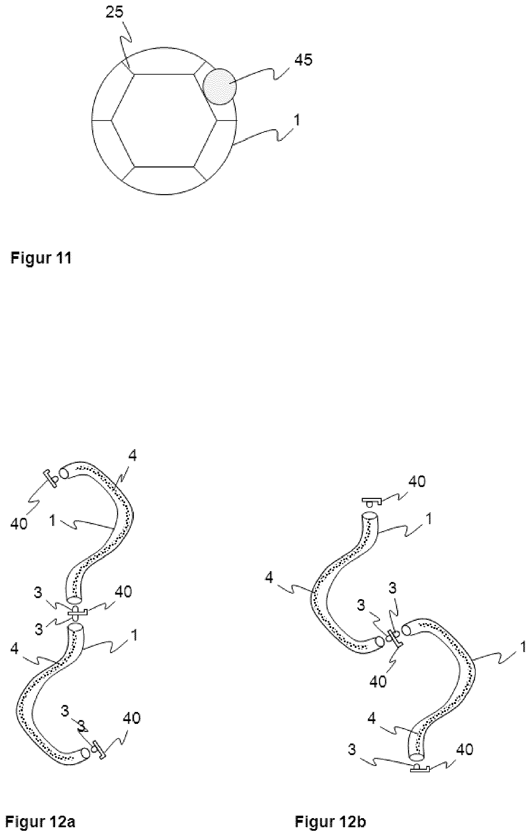

Figur 11 zeigt den Lichtleiter (1) mit Anfasung (25) und Anschlag (45) gemäß Figur 10 im Querschnitt auf der Ebene der Stirnfläche (2).

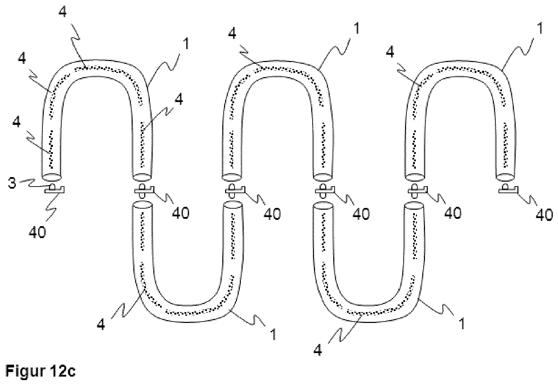

In den Figuren 12a bis 12c werden Beispiele von erfindungsgemäßen LED-Beleuchtungseinrichtungen mit gebogenen starren stabförmigen Lichtleitern (1) gezeigt. Die Mittel zum Auskoppeln (4) der von den LEDs (3) im Betriebszustand emittierten Strahlung (5) folgen in den Zeichnungen der Kontur des Lichtleiters (1). Es ist aber ebenso möglich, dass sie in beliebigen Formen auf den Lichtleiter (1) aufgebracht sind. Wie anhand der Figur 12c zu sehen ist, können die Mittel zum Auskoppeln (4) der Strahlung auch Abschnittsweise auf dem Lichtleiter (1) aufgebracht sein. Beliebige Ketten mit beliebigen Formen und trotzdem geringen Helligkeitsunterschieden ΔI lassen sich auf diese Weise erzeugen.

Die in den Figuren 12a bis 12c gezeigten Ausführungsformen mit den gebogenen starren Lichtleitern (1) werden bevorzugt in der dekorativen Beleuchtung eingesetzt. Möglich ist auch der Einsatz als Positionsbeleuchtung insbesondere in Automobilen, Lastkraftwagen und/oder Zügen. Bei diesen Anwendungen werden die LED-Beleuchtungseinrichtungen und damit die Lichtleiter (1) bevorzugt in die Scheinwerfer der Fahrzeuge integriert. Der Betrachter sieht in diesem Fall durch den Lichtleiter (1) hindurch und sieht die Kontur der Mittel zum Auskoppeln (4) im Betriebszustand leuchten. Bisher wurden solche Formverläufe durch das Anbringen einer Vielzahl von LEDs erreicht. Diese bisherige Lösung hat den Nachteil, dass die Ausfallwahrscheinlichkeit mit der Anzahl der verbauten LEDs steigt, da eine ausgefallene LED zur Folge hat, dass der Scheinwerfer ersetzt werden muss. Außerdem sind die LEDs dabei als einzelne Lichtpunkte wahrzunehmen, weshalb sich die LEDs in ihrer Helligkeit und ihres Farborts nicht stark unterscheiden dürfen. Daher müssen die LEDs vor ihrem Einbau eng selektiert werden, was den Herstellungsaufwand vergrößert. Mit steigender Anzahl von LEDs steigt die statistische Ausfallwahrscheinlichkeit (mean time between failures, MTBF), da Beleuchtungseinrichtungen bei dem Ausfall einer einzigen LED in der Regel als defekt gelten. Die erfindungsgemäße LED-Beleuchtungseinrichtung kommt mit bedeutend weniger LEDs je Scheinwerfer aus, wodurch die MTBF durch die Erfindung bedeutend verbessert wird.

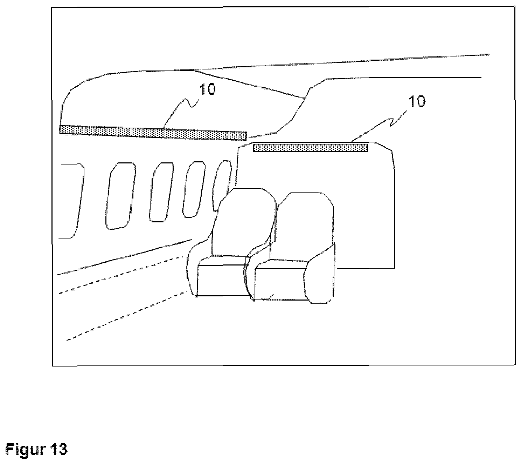

Figur 13 zeigt exemplarisch ein besonders bevorzugtes Einsatzgebiet der erfindungsgemäßen LED-Beleuchtungseinrichtung, nämlich zur Beleuchtung des Innenraums eines Flugzeugs, hier einer Passagierkabine. Gemäß Ausführungsbeispiel wurde eine LED-Beleuchtungseinrichtung gemäß Figur 9 anstelle von Leuchtstoffröhren in der Kabine verbaut. Neben den bereits beschriebenen Vorteilen bzgl. der Unempfindlichkeit gegenüber Vibrationen und der Stromersparnis hat die erfindungsgemäße LED-Beleuchtungseinrichtung bei dieser Anwendung den weiteren Vorteil, dass sie eine Doppelfunktion von Allgemein- und Ambientebeleuchtung erfüllen kann, insbesondere wenn die LEDs (3) in Form von LED-Chips ausgeführt sind, die durch Farbmischung verschiedene Farben und Lichtszenarien realisierbar machen. Ebenso ist es möglich, die erfindungsgemäße LED-Beleuchtungseinrichtung hinter einem Verkleidungsteil einzubauen, um eine indirekte Beleuchtung, z.B. als streifende Beleuchtung der Kabinendecke, zu erzielen.

Die vorgestellten LED-Beleuchtungseinrichtungen haben gegenüber dem Stand der Technik den Vorteil, dass sie die Vorteile der LED-Technologie für Flächenleuchten zugänglich machen. Durch die erfindungsgemäße Ausgestaltung und damit erreichten geringen Helligkeitsunterschieden $\Delta I$ in den Zwischenbereichen ist es möglich, eine gleichmäßige Intensität der Beleuchtung auf größeren Flächen und eine gute Energieeffizienz zur Verfügung zu stellen. Insbesondere sind die LED-Beleuchtungseinrichtungen auch in der Lage, in Umgebungen eingesetzt zu werden, in welchen starke Vibrationen auftreten können. Bei geeigneter Materialwahl sind sie auch flammfest und ermöglichen einen Einsatz in Umgebungen mit hohen Brandschutzanforderungen.

**Patentansprüche**

1. LED-Beleuchtungseinrichtung umfassend zumindest eine LED (3) und zwei voneinander getrennte stabförmige Lichtleiter (1), die so angeordnet sind, dass eine Stirnfläche (2) des einen Lichtleiters (1) und die nächstliegende Stirnfläche (2) des anderen Lichtleiters (1) einen Abstand A aufweisen und somit einen Zwischenbereich der Länge A bilden, wobei im Betriebszustand die Strahlung der zumindest einen LED (3) durch die an den Zwischenbereich angrenzenden Stirnflächen (2) in die Lichtleiter (1) eingekoppelt und in den Lichtleitern (1) geführt wird, wobei die Lichtleiter (1) Mittel zum Auskoppeln (4) von Strahlung (5) aufweisen, welche die in den Lichtleitern (1) geführte Strahlung in die Lichtleiter (1) hinein reflektieren, so dass im Betriebszustand die Strahlung (5) unter Durchtritt durch die Lichtleiter (1) lateral aus den Lichtleitern (1) ausgekoppelt wird,

**dadurch gekennzeichnet, dass**
die Mittel zum Auskoppeln (4) der Strahlung (5) im Aussenumfangsbereich der Lichtleiter (1) aufgebracht sind, und der Abstand A so gewählt wird, dass im Betriebszustand der Helligkeitsunterschied $\Delta I$ gemessen senkrecht zur Achse der Lichtleiter (1) in der Mitte des Zwischenbereichs in einem Abstand von 10 mm senkrecht zur Achse der Lichtleiter (1) höchstens 25% bezogen auf den Maximalwert der Helligkeit entlang der Achse der Lichtleiter (1) beträgt, wobei
die Länge A des Zwischenbereichs höchstens 15 mm beträgt.

2. LED-Beleuchtungseinrichtung nach dem vorherigen Anspruch, wobei sich im Zwischenbereich zwischen der jeweiligen LED (3) und der jeweiligen Stirnfläche (2) des jeweiligen Lichtleiters (1) keine weiteren optischen Einrichtungen befinden.

3. LED-Beleuchtungseinrichtung nach zumindest einem der vorhergehenden Ansprüche, wobei die Lichtleiter (1) ein Glas beinhalten, das enthält (in Gew.% auf Oxidbasis):

| | |
|---|---|
| $SiO_2$ | 70 - 85 |
| $B_2O_3$ | 8 - 20 |
| $Na_2O + K_2O + Li_2O$ | 2 - 8 |
| $Al_2O_3$ | 0 - 7 |
| $MgO + CaO + BaO + ZnO$ | 0 - 5, |

wobei das Glas bevorzugt in Summe höchstens 50 ppm $Fe^{2+}$ und/oder $Fe^{3+}$ enthält.

4. LED-Beleuchtungseinrichtung nach zumindest einem der vorhergehenden Ansprüche, wobei die Lichtleiter (1) mit einem Montagekörper (50) zum Fixieren der LED-Beleuchtungseinrichtung an anderen Gegenständen verbunden sind und die zumindest eine LED (3) auf einem Träger (40) angebracht ist, der wärmeleitend mit dem Montagekörper (50) verbunden ist; bevorzugt sind Träger (40) und Montagekörper (50) einteilig ausgeführt.

5. LED-Beleuchtungseinrichtung nach Anspruch 4, wobei jeder Lichtleiter (1) zumindest an einem Ende eine Anfasung (25) und der Träger (40) zumindest einen Anschlag (45) aufweist, der mit der Anfasung (25) der Lichtleiter (1) so zusammenwirkt, dass eine definierte Einbaulage der Mittel zum Auskoppeln (4) der Strahlung (5) relativ zum Montagekörper (50) resultiert.

6. LED-Beleuchtungseinrichtung nach zumindest einem der vorhergehenden Ansprüche, wobei die zumindest eine LED (3) einen Chip umfasst, insbesondere einen RGB-, einen RGBA-, einen RGBW- oder einen RGGB-Chip, dem ein Sensor und Maßnahmen zur Regelung des Farbortes und/oder der Intensität zugeordnet sind.

7. Beleuchtungsanordnung, umfassend mehr als eine LED-Beleuchtungseinrichtung nach zumindest einem der vorherigen Ansprüche, die so angeordnet sind, dass sich die Anordnung der Lichtleiter (1) und der Zwischenbereiche der Beleuchtungseinrichtung wiederholt.

8. Verwendung der LED-Beleuchtungseinrichtung nach zumindest einem der vorhergehenden Ansprüche zur Beleuchtung von Flächen und/oder Räumen ausgewählt aus der Gruppe

- Außenflächen und/oder
- Strassen und/oder Wege und/oder
- Fassaden und/oder Innenräume von Gebäuden und/oder
- Möbel und/oder Küchengeräte und/oder Kühlräume und/oder
- Innenräume von Fahrzeugen, bevorzugt Flugzeugkabinen oder Flugzeugfrachträume oder Züge oder Automobile, und/oder
- Konturbeleuchtung von Fahrzeugen.


**Claims**

1. LED illumination device, comprising at least one LED (3) and two separate bar-shaped optical waveguides (1), which are arranged such that an end face (2) of one optical waveguide (1) and the nearest end face (2) of the other optical waveguide (1) have a distance A and thus form an intermediate region having the length A,
wherein in the operating state the radiation of the at least one LED (3) is coupled into the optical waveguides (1) by way of the end faces (2) adjoining the intermediate region and is guided in the optical waveguides (1),
wherein the optical waveguides (1) have means (4) for coupling radiation (5) out, which reflect the in the optical waveguides (1) guided radiation into the optical waveguides (1) such that in the operating state the radiation (5) passing through the optical waveguides (1) is coupled out of the optical waveguides (1) laterally, **characterized in that** the means (4) for coupling the radiation (5) out are located in the outer circumferential region of the optical waveguides (1) and the distance A is selected such that in the operating state the brightness difference $\Delta I$, measured perpendicular to the axis of the optical waveguides (1) in the centre of the intermediate region, at a distance of 10 mm perpendicular to the axis of the optical waveguides (1) is at most 25%, based on the maximum value of the brightness along the axis of the optical waveguides (1), wherein the length A of the intermediate region is at most 15 mm.

2. LED illumination device according to the preceding claim, wherein no further optical devices are located in the intermediate region between the respective LED (3) and the respective end face (2) of the respective optical waveguide (1).

3. LED illumination device according to at least either of the preceding claims, wherein the optical waveguides (1) include a glass which contains (in % by weight on oxide basis):

| | |
|---|---|
| $SiO_2$ | 70-85 |
| $B_2O_3$ | 8-20 |
| $Na_2O+K_2O+Li_2O$ | 2-8 |
| $Al_2O_3$ | 0-7 |
| $MgO+CaO+BaO+ZnO$ | 0-5, |

wherein the glass in sum preferably contains at most 50 ppm $Fe^{2+}$ and/or $Fe^{3+}$.

4. LED illumination device according to at least one of the preceding claims, wherein the optical waveguides (1) are connected to a mounting body (50) for fixing the LED illumination device to other objects, and the at least one LED (3) is mounted on a carrier (40) which is thermally conductively connected to the mounting body (50); the carrier (40) and the mounting body (50) are preferably embodied in one part.

5. LED illumination device according to at least one of the preceding claims, wherein each optical waveguide (1) has at least at one end a chamfer (25) and the carrier (40) has at least one abutment (45), which interacts with the chamfer (25) of the optical waveguides (1) such that the result is a defined installation position of the means for coupling out (4) the radiation (5) relative to the mounting body (50).

6. LED illumination device according to at least one of the preceding claims, wherein the LED (3) comprises a chip, in particular an RGB, RGBA, RGBW or RGGB chip, which is assigned a sensor and measures for controlling the colour point and/or the intensity.

7. Illumination arrangement, comprising more than one LED illumination device according to at least one of the preceding claims, which are arranged such that the arrangement of the optical waveguides (1) and of the intermediate regions of the illumination device repeats.

8. Use of the LED illumination device according to at least one of the preceding claims for illuminating surfaces and/or spaces from the group

- external surfaces and/or
- streets and/or alleys and/or
- facades and/or interior spaces of buildings and/or
- furniture and/or kitchen appliances and/or cooling spaces and/or
- interior spaces of vehicles, preferably aircraft cabins or aircraft cargo spaces or trains or cars, and/or
- contour illumination of vehicles.

**Revendications**

1. Dispositif d'éclairage à diodes électroluminescentes, DEL, comprenant au moins une DEL (3) et deux guides de lumière (1) en forme de barre, séparés l'un de l'autre, qui sont disposés de telle sorte qu'une face frontale (2) d'un guide de lumière (1) et la face frontale (2) la plus proche de l'autre guide de lumière (1) présentent une distance A et forment donc une zone intermédiaire de longueur A, dans lequel, à l'état de fonctionnement, le rayonnement de ladite au moins une DEL (3) est injecté dans les guides de lumière (1) à travers les faces frontales (2) adjacentes à la zone intermédiaire et est guidé dans les guides de lumière (1), dans lequel les guides de lumière (1) présentent des moyens pour découpler (4) un rayonnement (5), qui réfléchissent le rayonnement guidé dans les guides de lumière (1) à l'intérieur des guides de lumière (1), de sorte qu'à l'état de fonctionnement, le rayonnement (5) est découplé latéralement des guides de lumière (1) en passant par les guides de lumière (1), **caractérisé en ce que** les moyens pour découpler (4) le rayonnement (5) sont appliqués dans la zone circonférentielle extérieure des guides de lumière (1) et la distance A est choisie de telle sorte qu'à l'état de fonctionnement, la différence de luminosité $\Delta I$, mesurée perpendiculairement à l'axe des guides de lumière (1) au milieu de la zone intermédiaire à une distance de 10 mm perpendiculairement à l'axe des guides de lumière (1), est au maximum de 25 % en se référant à la valeur maximale de la luminosité le long de l'axe des guides de lumière (1), la longueur A de la zone intermédiaire étant au maximum de 15 mm.

2. Dispositif d'éclairage à DEL selon la revendication précédente, dans lequel aucun dispositif optique supplémentaire n'est présent dans la zone intermédiaire entre la DEL (3) respective et la face frontale (2) respective du guide de lumière respectif (1).

3. Dispositif d'éclairage à DEL selon au moins l'une des revendications précédentes, dans lequel les guides de lumière (1) comprennent du verre qui contient (en pourcentage en poids sur une base d'oxyde) :

| | |
|---|---|
| $SiO_2$ | 70 à 85 |
| $B_2O_3$ | 8 à 20 |
| $Na_2O + K_2O + Li_2O$ | 2 à 8 |
| $Al_2O_3$ | 0 à 7 |
| $MgO + CaO + BaO + ZnO$ | 0 à 5, |

le verre contenant de préférence au total au maximum 50 ppm $Fe^{2+}$ et/ou $Fe^{3+}$.

4. Dispositif d'éclairage à DEL selon au moins l'une des revendications précédentes, dans lequel le guide de lumière (1) est relié à un corps de montage (50) pour fixer le dispositif d'éclairage à DEL sur d'autres objets, et ladite au moins une DEL (3) est appliquée à un support (40) qui est relié au corps de montage (50) de manière thermoconductrice ; le support (40) et le corps de montage (50) étant de préférence réalisés d'un seul tenant.

5. Dispositif d'éclairage à DEL selon la revendication 4, dans lequel chaque guide de lumière (1) présente au moins à une extrémité un chanfrein (25) et le support (40) présente au moins une butée (45) qui coopère avec le chanfrein (25) des guides de lumière (1) de telle sorte qu'il en résulte une position d'installation définie des moyens pour découpler (4) le rayonnement (5) par rapport au corps de montage (50).

6. Dispositif d'éclairage à DEL selon au moins l'une des revendications précédentes, dans lequel ladite au moins une DEL (3) comprend une puce, en particulier une puce RGB, RGBA, RGBW ou RGGB à laquelle est associé un capteur et des mesures pour réguler la localisation chromatique et/ou l'intensité.

7. Ensemble d'éclairage, comprenant plus d'un dispositif d'éclairage à DEL selon au moins l'une des revendications précédentes, qui est disposé de telle sorte que la disposition des guides de lumière (1) et des zones intermédiaires du dispositif d'éclairage se répète.

8. Utilisation du dispositif d'éclairage à DEL selon au moins l'une des revendications précédentes pour éclairer des surfaces et/ou des espaces, sélectionnés dans le groupe comprenant

- des surfaces extérieures et/ou
- des routes et/ou des chemins et/ou
- des façades et/ou des espaces intérieurs de bâtiments et/ou
- des meubles et/ou des appareils de cuisine et/ou des chambres froides et/ou

- des habitacles de véhicules, de préférence des cockpits d'avion et des soutes d'avion ou des trains ou des automobiles, et/ou
- un éclairage de contour de véhicules.

EP 2 691 799 B1

**Figur 1**

**Figur 2**

Figur 3

Figur 4

**Figur 5**

Figur 6

**Figur 7**

Figur 8

Figur 9

**Figur 10**

**Figur 11**

**Figur 12a**

**Figur 12b**

**Figur 12c**

Figur 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4733332 A
- EP 2063168 A1
- WO 2011035081 A1
- WO 2009100834 A1